Europäisches Patentamt

European Patent Office

Office européen des brevets

(11) Veröffentlichungsnummer: **0 360 188**
**A2**

## (12) EUROPÄISCHE PATENTANMELDUNG

(21) Anmeldenummer: 89117208.2

(22) Anmeldetag: 18.09.89

(51) Int. Cl.5 **C09D 167/08 , C08G 63/48 ,
C09D 175/04 , C08G 18/62 ,
C08G 18/42 , C08G 18/36**

(30) Priorität: 23.09.88 AT 2347/88

(43) Veröffentlichungstag der Anmeldung:
28.03.90 Patentblatt 90/13

(34) Benannte Vertragsstaaten:
BE CH DE ES FR GB GR IT LI NL SE

(71) Anmelder: **Vianova Kunstharz
Aktiengesellschaft**

**A-8402 Werndorf(AT)**

(72) Erfinder: **Awad, Rami-Raimund, Dipl.-Ing.
Papiermühlgasse 28
A-8020 Graz(AT)**
Erfinder: **Urbano, Edmund, Dr.
Tannhofweg 2
A-8044 Graz(AT)**
Erfinder: **Locker, Herbert
Hergottwiesgasse 68
A-8020 Graz(AT)**

(54) Verfahren zur Herstellung von niedrigviskosen, lufttrocknenden Bindemitteln für festkörperreiche, schnelltrocknende Maler- und Bautenlacke.

(57) Die vorliegende Erfindung betrifft ein Verfahren zur Herstellung von niedrigviskosen, lufttrocknenden Bindemittel. Fettsäure-Pfropfcopolymerisate auf Basis von trocknenden Fettsäuren, Vinyl- und/oder (Meth)acryl-Monomeren und gegebenenfalls Tetrahydrophthalsäureanhydrid werden in Gegenwart trocknender Fettsäuren und, gegebenenfalls Monocarbonsäuren und/oder Dicarbonsäuren, mit Polyolen, deren Funktionalität 3 bis 6 beträgt, verestert und gegebenenfalls mit Diisocyanaten umgesetzt.

Die Bindemittel eignen sich zur Formulierung von festkörperreichen, schnelltrocknenden Maler- und Bautenlacken.

EP 0 360 188 A2

## Verfahren zur Herstellung von niedrigviskosen, lufttrocknenden Bindemitteln für festkörperreiche, schnelltrocknende Maler- und Bautenlacke.

Die vorliegende Erfindung betrifft ein Verfahren zur Herstellung von niedrigviskosen, lufttrocknenden Bindemitteln, die sich zur Formulierung von festkörperreichen, schnelltrocknenden Maler- und Bautenlacken eignen.

Mit bestimmten Lackbindemitteln, wie mit Standölen und langöligen Alkydharzen, läßt sich in Maler- und Bautenlacken ein hoher Festkörpergehalt erreichen, doch müssen lange Trocknungszeiten und eine starke Gilbungstendenz als Nachteile in Kauf genommen werden. Niedrigviskose Harze dieser Art zeigen außerdem während der oxidativen Trocknung eine ausgeprägte Runzelneigung und eine schlechte Durchtrocknung in dickeren Schichten.

Es hat nicht an Versuchen gefehlt, diese Mängel zu beseitigen, da festkörperreiche Maler- und Bautenlacke wegen ihrer geringen Lösemittelemission von großem Interesse sind.

So wird in der US-PS 4,056,495 der Zusatz von Aluminiumalkoholaten bzw. -chelaten als zusätzliche Trockenstoffe empfohlen, womit die Nachteile der niedrigen Molmasse der Harze durch eine verstärkte Vernetzung des Filmes überwunden werden sollen.

Mit mehrfunktionellen Acylsäureestern als reaktive Verdünnnungsmittel (US-PS 4,224,202) gelingt es, die Viskosität von konventionellen Alkydharzen zu senken. Solche Reaktivverdünner dienen wie organische Lösemittel als Verdünnungsmittel bei der Applikation, sie werden bei der Filmbildung jedoch in den Film eingebaut. Den gleichen Effekt zeigen auch Dicyclopentenyloxyethylmethacrylat (EP 0 45 136) oder dessen Copolymere, gelöst in anderen Monomeren (US 4,387,190).

Da dieser Zusatz von niedrigmolekularen Monomeren eine deutliche Verzögerung der Trocknung mit sich bringt, wurde versucht, reaktionsfähige Doppelbindungen bereits in das Alkydharzgerüst einzubauen. So wird in der EP-PS 175 097 der Einbau von Diisocyanaten, welche mit Hydroxyethyl(meth)acrylat halbverkappt sind, empfohlen. Eine signifikante Trocknungsbeschleunigung kann dadurch nicht erreicht werden. Der Einbau von Allylethern, insbesonders von Trimethylolpropandiallylether (EP 234 641 A 1), führt ebenfalls zu deutlich niedrigviskoseren Harzen mit gegenüber den üblichen Alkydharzen ebenso verzögerter Trocknung.

Bei den sogenannten styrolisierten oder acylmodifizierten Alkydharzen, wie sie in K. Winnacker, L. Küchler, "Chemische Technologie", C. Hanser Verlag, München, 1972, Band 5, Seiten 417 - 418 angeführt sind, treten die Nachteile einer schlechten Trocknung und verstärkten Runzelbildung nicht auf, soferne eine ausreichend hohe und damit wirksame Modifizierung angewendet wird.

Nach diesem Verfahren hergestellte Bindemittel haben jedoch hohe Viskositäten, obwohl gemäß Patentanmeldung EP 268 236 A 2 bei Verwendung von Di-Pentaerythrit und/oder Di-Trimethylolpropan als Polyolkomponente für das Alkydharz und von sehr geringen Anteilen an alpha-beta-ethylenisch ungesättigten Monomeren auch niedrigviskose Produkte erhalten werden, die auf Grund ihrer Zusammensetzung erfahrungsgemäß eher schlecht trocknende und kratzempfindliche Filme ergeben.

In der Patentanmeldung EP 267 562 A 2 werden als Emulgatoren wirkende Alkydharze beschrieben, bei denen die für die Wasserverdünnbarkeit wesentlichen Carboxylgruppen von Methacrylsäureeinheiten stammen, welche zusammen mit anderen Vinyl- und oder (Meth)acrylverbindungen vor der Alkydharz-Herstellung auf einen Teil der ungesättigten Fettsäuren aufgepfropft wurden.

Es wurde nun überraschenderweise gefunden, daß nach diesem Aufbauprinzip bei geeigneter Auswahl der Reaktionspartner, niedrigviskose, lufttrocknende Bindemittel erhalten werden, welche sich zur Formulierung von festkörperreichen, schnelltrocknenden Maler- und Bautenlacken eignen.

Die Erfindung betrifft demgemäß ein Verfahren zur Herstellung von niedrigviskosen, lufttrocknenden Bindemitteln zur Formulierung von festkörperreichen, schnelltrocknenden Maler- und Bautenlacken, welches dadurch gekennzeichnet ist, daß man

(A) 25 bis 50 Gew.-% eines Fettsäure-Pfropfcopolymerisats aus

   Aa) 20 bis 60 Gew.-% an trocknenden Fettsäuren mit einer Jodzahl von über 130, vorzugsweise von 150 bis 200, und mit überwiegend isolierten Doppelbindungen,

   Ab) gegebenenfalls 5 bis 10 Gew.-% Tetrahydrophthalsäureanhydrid,

   Ac) gegebenenfalls 1 bis 8 Gew.-% Methacrylsäure und

   Ad) 30 bis 70 Gew.-% einer Mischung von Vinyl-und/oder (Meth)acryl-Monomeren, die außer der C-C-Doppelbindung keine weiteren funktionellen Gruppen tragen, mit

(B) 30 bis 60 Gew.-% an trocknenden Fettsäuren mit einer Jodzahl von über 130, vorzugsweise von 140 bis 200,

(C) gegebenenfalls bis zu 10 Gew.-% an aromatischen und/oder aliphatischen Monocarbonsäuren,

(D) 5 bis 25 Gew.-% an Polyolen mit 3 bis 6 Hydroxylgruppen pro Molekül,

(E) gegebenenfalls bis zu 20 Gew.-% an Polycarbonsäuren oder deren Anhydriden mit 2 bis 4 Carboxylgruppen pro Molekül,

bei 170 bis 260°C unter Azeotropdestillation mit Xylol als Kreislaufmittel bis zu einer Säurezahl von unter 30 mg KOH/g umsetzt, und

(F) gegebenenfalls anschließend mit bis zu 15 Gew.-% an Diisocyanaten und/oder deren Dimeren bei 70 bis 130°C bis zu einem NCO-Wert von 0 reagiert,

mit der Maßgabe, daß die Endprodukte eine Grenzviskositätszahl (gemessen in Chloroform bei 20°C) von 5,3 bis 9,0 ml/g, vorzugsweise von 6,0 bis 8,0 ml/g, aufweisen, und die Summen der Prozentzahlen für Aa) bis Ad) und A) bis F) jeweils 100 ergeben.

Die Erfindung betrifft weiters die Verwendung dieser Bindemittel zur Formulierung von festkörperreichen, schnelltrocknenden Maler- und Bautenlacken.

Gegenüber den im Stand der Technik erwähnten Bindemitteln zeichnen sich die erfindungsgemäßen Produkte im Lack durch eine raschere Antrocknung und Durchtrocknung, bessere Filmhärte und geringere Runzelneigung in Schichtdicken über 400 μm aus.

Für die Herstellung der gepfropften Fettsäuren werden ungesättigte Fettsäuren mit einer Jodzahl über 130, vorzugsweise von 150 bis 200, und mit überwiegend isolierten Doppelbindungen eingesetzt, wobei in der Praxis Leinölfettsäure, Saflorölfettsäure und Sonnenblumenölfettsäure besonders geeignet sind.

Die Mitverwendung von Fettsäuren mit konjugierten Mehrfach-Doppelbindungen, wie sie z.B. durch künstliche Isomerisation von linolsäurereichen Fettsäuregemischen oder durch Dehydratisierung von Rizinusöl und anschließender Esterspaltung erhalten werden, darf in der Pfropfungsreaktion nur in untergeordnetem Maße (bis 20 Gew.-% des in dieser Phase eingesetzten Fettsäureanteils) erfolgen, da ein größerer Anteil zu derart hohen Viskositäten führt, daß eine Formulierung festkörperreicher Maler- und Bautenlacke nicht möglich ist.

Als Monomere für die Pfropfcopolymerisation mit den Fettsäuren werden im wesentlichen solche Vinyl- und/oder (Meth)acrylverbindungen verwendet, welche neben der C-C-Doppelbindung und gegebenenfalls einer Carboxylgruppe keine weitere funktionelle Gruppe tragen. Beispiele für solche Monomeren sind aromatische Vinylverbindungen, wie Styrol, para-Methylstyrol, Vinyltoluol, sowie (Meth)acrylsäureester von $C_1$-$C_{12}$-Monoalkoholen und Vinylester von Monocarbonsäuren, wie Vinylacetat und Versaticsäurevinylester.

Bevorzugt verwendet werden Monomermischungen, welche benzinlösliche Copolymere ergeben, insbesondere solche von para-Methylstyrol, Vinyltoluol und (Meth)acrylsäureestern von $C_1$-$C_{12}$-Monoalkoholen.

Die Propfcopolymerisation wird so durchgeführt, daß die Fettsäure auf 110 - 150°C erhitzt wird und die Mischung der Monomeren mit einem geeigneten Initiator im Verlauf von einigen Stunden zudosiert wird. Die Reaktionsmichung wird anschließend so lange weiter auf Reaktionstemperatur gehalten, bis eine Rückstandsbestimmung einen Polymerisationsumsatz von über 95 % ergibt.

Als Initiatoren werden vor allem Peroxide verwendet, deren Zerfallstemperatur über 80°C liegt, insbesondere solche, die eine Halbwertszeit von 1 - 2 Stunden im Temperaturbereich zwischen 120°C und 180°C besitzen, z.B. tert.-Butyl-perbenzoat, Di-tert.-butylperoxid, Dicumylperoxid, Cumolhydroperoxid, tert.-Amyl-peroxid.

Die Gegenwart inerter Lösemittel während der Pfropfcopolymerisation ist nicht erforderlich, kleine Mengen erleichtern jedoch die praktische Durchführung dieses Verfahrensschrittes.

Die Fettsäure-Pfropfcopolymerisate sind aus 20 bis 60 Gew.-% der oben angeführten Fettsäuren, gegebenenfalls 5 bis 10 Gew.-% Tetrahydrophthalsäureanhydrid, gegebenenfalls 1 bis 8 Gew.-% Methacrylsäure und 30 bis 70 Gew.-% der oben genannten Vinyl- und (Meth)acrylmonomeren zusammengesetzt, wobei die Summe der Prozentanteile 100 betragen muß.

Die so hergestellten Fettsäure-Pfropfcopolymerisate werden zusammen mit weiteren Fettsäuren, gegebenenfalls aromatischen und/oder aliphatischen Monocarbonsäuren, Polyolen, gegebenenfalls Polycarbonsäuren und gegebenenfalls Diisocyanaten zu den erfindungsgemäßen Bindemitteln umgesetzt.

Als Fettsäuren können in dieser Stufe pflanzliche und tierische Fettsäuren mit einer Jodzahl über 130 eingesetzt werden, wobei auch konjugierte Doppelbindungen vorliegen können. Geeignet sind u.a. Sonnenblumenöl-, Leinöl-, Safloröl- und Tallölfettsäure, isomerisierte Produkte dieser Fettsäuren, sowie Rizinenfettsäure.

Als aromatische und/oder aliphatische Monocarbonsäuren kommen alle Produkte in Betracht, welche zur Herstellung von Alkydharzen verwendet werden, wie Benzoesäure, p-tert.-Butylbenzoesäure, Harzsäuren, wie Abietin- und Lävopimarsäure, und ungesättigte Monocarbonsäuren, wie Crotonsäure und Sorbinsäure.

Als Polyole eignen sich solche mit einer Hydroxyl-Funktionalität von drei bis sechs, z.B. Trimethylolpropan, Di-Trimethylolpropan, Pentaerythrit, Di-Pentaerythrit, Sorbit und ähnliche Zuckeralkohole, sowie Hy-

3

droxylgruppen tragende heterocyclische Verbindungen, wie Trishydroxyethylisocyanurat.

Beispiele für mehrbasige Carbonsäuren bzw. ihre Anhydride sind Phthalsäureanhydrid, Tetrahydrophthalsäureanhydrid, Endomethylentetrahydrophthalsäureanhydrid, Isophthalsäure, Terephthalsäure, Dimerfettsäuren, Hexachloroendomethylentetrahydrophthalsäure (HET-Säure) und ihr Anhydrid, Adipinsäure und andere aliphatische Dicarbonsäuren, Trimellitsäureanhydrid und Pyromellitsäureanhydrid.

Anstelle der Di- oder Polycarbonsäuren können anteilig oder ganz Diisocyanate, wie Toluylendiisocyanat, Iso phorondiisocyanat, Hexamethylendiisocyanat, Trimethylhexamethylendiisocyanat und ihre Dimeren verwendet werden.

In einem ersten Reaktionsschritt werden das Fettsäure-Pfropfcopolymerisat, die Fettsäuren und die Monocarbonsäuren mit den Polyolen bei 170 - 260° C unter Azeotropdestillation mit Xylol als Kreislaufmittel verestert.

Nach Unterschreiten einer Säurezahl von 30 mg KOH/g werden gegebenenfalls Di- und/oder Polycarbonsäuren mit bis zu 4 Carboxylgruppen pro Molekül bzw. deren Anhydride zugegeben, und es wird nochmals durch Azeotropdestillation bei 170 - 260° C mit Xylol als Kreislaufmittel auf eine Säurezahl unter 30 mg KOH/g verestert.

Gegebenenfalls erfolgt anschließend eine Umsetzung mit Diisocyanaten bei 70 bis 130° C in 80 - 90%iger Lösung in einem inerten Lösungsmittel wie Xylol oder Testbenzin. Solcherart erhaltene urethanmodifizierte Produkte zeigen gegenüber reinen Esterharzen eine schnellere Antrocknung sowie eine bessere Filmhärte.

Schließlich wird das während der Herstellung verwendete Lösemittel im Vakuum bei 120 - 160° C abdestilliert und das Bindemittel in einem für die Applikation günstigen Lösemittel auf 90 % Festkörper angelöst. Bevorzugt werden dafür aromatenfreie Benzine, Propylenglykolether und $C_1$-$C_4$ Alkohole verwendet.

Die Bindemittel weisen eine Grenzviskositätszahl (gemessen in Chloroform bei 20° C) von 5,3 bis 9,0 ml/g, vorzugsweise von 6,0 bis 8,0 ml/g, auf und eignen sich insbesonders zur Formulierung von niedrigviskosen, festkörperreichen Maler- und Bautenlacken, deren Her stellung mit den üblichen Pigmenten und Zusatzmitteln dem Fachmann bekannt ist und keiner eingehenden Erläuterung bedarf.

Die folgenden Beispiele erläutern die Erfindung, ohne sie in ihrem Umfang zu beschränken. Alle Angaben in Teilen oder Prozenten beziehen sich auf Gewichtseinheiten.


Beispiel 1:

70 Tle Leinölfettsäure und 23 Tle Xylol werden auf 135 - 140° C erhitzt und innerhalb von 4 - 6 Stunden eine Mischung von 100 Tlen para-Methylstyrol, 33 Tlen Isobuylmethacrylat, 7 Tlen Methacrylsäure und 4,2 Tlen Di-tert.-butylperoxid als Initiator zugegeben. Nach Beendigung der Zugabe wird die Reaktionstemperatur beibehalten, bis eine Rückstandsbestimmung einen mindestens 95%igen Polymerisationsumsatz ergibt. Bei einem zu langsamen Reaktionsfortgang wird der Ansatz mit 1 Tl Di-tert.-butylperoxid versetzt. Das Fettsäure-Pfropfcopolymerisat (1) weist eine Säurezahl von 80 mg KOH/g und eine Grenzviskositätszahl (gemessen in Chloroform bei 20° C) von 8,2 ml/g auf und wird für die Weiterverarbeitung mit Xylol auf 90 % Festkörpergehalt eingestellt.

500 Tle (450 Tle Festharz) des Fettsäure-Pfropfcopolymerisats (1) werden mit 260 Tlen Saflorölfettsäure, 280 Tlen einer künstlich isomerisierten Sonnenblumenölfettsäure mit 50 % Konjuenanteil, 85 Tlen p-tert.-Butylbenzoesäure, 150 Tlen Pentaerythrit und 25 Tlen Tetrahydrophthalsäureanhydrid bei 210° C unter Azeotropdestillation mit Xylol als Kreislaufmittel bis zu einer Säurezahl von 10 mg KOH/g und anschließend mit 60 Tlen Isophorondiisocyanat bei 100 - 110° C bis zu einem NCO-Gehalt von 0 zum Bindemittel 1 umgesetzt. Nach dem Ab destillieren des Xylols unter Vakuum wird das so erhaltene Produkt in Methoxypropoxypropanol angelöst.

| Kenndaten: | |
| --- | --- |
| Festkörpergehalt : | 90 % |
| Saürezahl : | 9,8 mg KOH/g |
| Grenzviskosität (Chloroform) : | 7,6 ml/g |
| Viskosität(auf 70 % mit Testbenzin verdünnt, DIN 53211/20° C): | 150 s |

4

Beispiel 2:

70 Tle Sonnenblumenölfettsäure werden mit 70 Tlen para-Methylstyrol, 40 Tlen Isobutylmethacrylat, 15 Tlen Methacrylsäure und 15 Tlen Dicyclopentenyloxyethylmethacrylat analog Beispiel 1, jedoch ohne Lösungsmittel und mit 5 Tlen p-tert.-Butyl-perbenzoat als Initiator, bei 125°C gepfropft. Das Fettsäure-Pfropfcopolymerisat (2) weist eine Säurezahl von 103 mg KOH/g und eine Grenzviskositätszahl (gemessen in Chloroform bei 20°C) von 8,2 ml/g auf und wird für die Weiterverarbeitung mit Xylol auf 90 % Festkörpergehalt eingestellt.

433 Tle (390 Tle Festharz) des Fettsäure-Pfropfcopolymerisats (2) werden mit 700 Tlen Rizinenfettsäure, 150 Tlen Pentaerythrit und 186 Tlen Hexachloroendomethylentetrahydropthalsäureanhydrid unter Azeotropdestillation bei 185°C mit Xylol als Lösungsmittel zum Bindemittel 2 umgesetzt. Nach dem Abdestillieren des Xylols unter Vakuum wir das erhaltene Produkt in Methoxypropoxypropanol angelöst.

| Kenndaten: | |
|---|---|
| Festkörpergehalt : | 90 % |
| Saürezahl : | 12,2 mg KOH/g |
| Grenzviskosität (Chloroform) : | 7,2 ml/g |
| Viskosität (auf 70 % mit Testbenzin verdünnt, DIN 53211/20°C): | 42 s |

Beispiel 3:

40 Tle Leinölfettsäure, 30 Tle Saflorölfettsäure und 33 Tle Xylol werden mit 17 Tlen Tetrahydrophthalsäureanhydrid auf 125°C erhitzt und diese Temperatur bis zur völligen Auflösung des Tetrahydrophthalsäureanhydrids beibehalten. Innerhalb von 4 bis 6 Stunden wird eine Mischung von 80 Tlen para-Methylstyrol, 38 Tlen Isobutylmethacrylat, 10 Tlen Methylmethacrylat, 12 Tlen Methacrylsäure und 5 Tlen tert.-Butylperbenzoat als Initiaor zugegeben. Nach Beendigung der Zugaben wird die Reaktionstemperatur beibehalten, bis die Rückstandsbestimmung einen mindestens 95%igen Polymerisationsumsatz ergibt. Bei einem zu langsamen Reaktionsfortgang wird der Ansatz mit 1 Tl tert.-Butyl-perbenzoat versetzt. Das Fettsäure-Pfropfcopolymerisat (3) weist eine Säurezahl von 122 mg KOH/g und eine Grenzviskositätszahl (gemessen in Chloroform bei 20°C) von 8,2 ml/g auf und wird für die Weiterverarbeitung mit Xylol auf 80 % Festkörpergehalt eingestellt.

490 Tle (392 Tle Festharz) dieses Fettsäure-Pfropfcopolymerisats (3) werden mit 400 Tlen Saflorölfettsäure, 365 Tlen einer künstlich isomerisierten Sonnenblumenölfettsäure mit 50 % Konjuenanteil, 160 Tlen Pentaerythrit und 135 Tlen Hexachloroendomethylentetrahydrophthalsäureanhydrid unter Azeotropdestillation bei 185°C mit Xylol als Kreislaufmittel zum Bindemittel 3 umgesetzt. Nach dem Abdestillieren des Xylols unter Vakuum wird das erhaltene Produkt in Methoxypropoxypropanol angelöst.

| Kenndaten: | |
|---|---|
| Festkörpergehalt : | 90 % |
| Saürezahl : | 15 mg KOH/g |
| Grenzviskosität (Chloroform) : | 7,0 ml/s |
| Viskosität (auf 70 % mit Testbenzin verdünnt, DIN 53211/20°C): | 56 s |

Beispiel 4:

490 Tle des in Beispiel 3 beschriebenen Fettsäure-Pfropfcopolymerisats (3) (392 Tle Festharz) werden mit 450 Tlen Saflorölfettsäure, 265 Tlen einer künstlich isomerisierten Sonnenblumenölfettsäure mit 50 % Konjuenanteil, 160 Tlen Pentaerythrit bei 210°C unter Azeotropdestillation mit Xylol als Kreislaufmittel bis zu einer Säurezahl unter 25 mg KOH/g umgesetzt, 50 Tle Trimellitsäureanhydrid zugegeben und durch weitere Azeotropdestillation bei 210°C das Bindemittel 4 erhalten. Nach dem Abdestillieren des Xylols unter Vakuum wird das erhaltene Produkt in Methoxypropoxypropanol angelöst.

| Kenndaten: | |
|---|---|
| Festkörpergehalt : | 90 % |
| Saürezahl : | 20 mg KOH/g |
| Grenzviskosität (Chloroform) : | 7,8 ml/g |
| Viskosität (auf 70 % mit Testbenzin verdünnt, DIN 53211·20°C): | 70 s |

Beispiel 5:

490 Tle des in Beispiel 3 beschriebenen Fettsäure-Pfropfcopolymerisats (3) werden mit 450 Tlen Saflorölfettsäure, 265 Tlen einer künstlich isomerisierten Sonnenblumenölfettsäure mit 50 % Konjuenanteil, 160 Tlen technischem Pentaerythrit mit 12 % Dipentaery thritgehalt unter Azeotropdestillation bei 210°C bis zu einer Säurezahl von 12 mg KOH/g und anschließend mit 70 Tlen Isophorondiisocyanat bei 100 - 110°C bis zu einem NCO-Gehalt von 0 zum Bindemittel 5 umgesetzt. Nach dem Abdestillieren des Xylols unter Vakuum wird das erhaltene Produkt in Methoxypropoxypropanol angelöst.

| Kenndaten: | |
|---|---|
| Festkörpergehalt : | 90 % |
| Saürezahl : | 11,5 mg KOH/g |
| Grenzviskosität (Chloroform) : | 8,0 ml/g |
| Viskosität(auf 70 % mit Testbenzin verdünnt, DIN 53211/20°C): | 175 s |

Beispiel 6:

70 Tle Leinölfettsäure, 70 Tle Sonnenblumenölfettsäure und 23 Tle Xylol werden auf ca. 140°C erhitzt und innerhalb von 4 Stunden eine Mischung von 80 Tlen para-Methylstyrol, 54 Tlen Isobutylmethacrylat, 6 Tlen n-Butylacrylat und 6 Tlen Di-tert.-butylperoxid als Initiator zugegeben. Nach Beendigung der Zugabe wird die Reaktionstemperatur beibehalten, bis eine Rückstandsbestimmung einen mindestens 95%igen Polymerisationsumsatz ergibt. Bei einem zu langsamen Reaktionsfortgang wird der Ansatz mit 1 Tl Di-tert.-butylperoxid versetzt. Das Fettsäure-Pfopfcopolymerisat (6) weist eine Säurezahl von 102 mg KOH/g und eine Grenzviskositätszahl (gemessen in Chloroform bei 20°C) von 6.6 ml/g auf und wird für die Weiterverarbeitung mit Xylol auf 90 % Festkörpergehalt eingestellt.

700 Tle (630 Tle Festharz) des Fettsäure-Pfropfcopolymerisats (6) werden mit 260 Tlen Saflorölfettsäure, 350 Tlen einer künstlich isomerisierten Sonnenblumenölfettsäure mit 50 % Konjuenanteil, 165 Tlen Pentaerythrit und 220 Tlen Hexachloroendomethylentetrahydrophthalsäu reanhydrid bei 185°C unter Azeotropdestillation mit Xylol als Kreislaufmittel bis zu einer Säurezahl von 10 mg KOH/g zum Bindemittel 6 umgesetzt. Nach dem Abdestillieren des Xylols unter Vakuum wird das so erhaltene Produkt in Methoxypropoxypropanol angelöst.

| Kenndaten: | |
|---|---|
| Festkörpergehalt : | 90 % |
| Saürezahl : | 9,8 mg KOH/g |
| Grenzviskosität (Chloroform) : | 6,6 ml/g |
| Viskosität (auf 70 % mit Testbenzin verdünnt, DIN 53 211/20°C: | 40 s |

Vergleichsbeispiel A:

210 Tle Leinölfettsäure, 220 Tle Sonnenblumenölfettsäure, 280 Tle Rizinenfettsäure, 83 Tle Tetrahydrophthalsäureanhydrid und 150 Tle Pentaerythrit werden durch Azeotropdestillation bei 210° C mit Xylol als Kreislaufmittel bis zu einer Säurezahl unter 5 mg KOH/g verestert. Nach dem Abkühlen auf 135 - 140° C werden innerhalb von 4 Stunden 135 Tle para-Methylstyrol, 63 Tle Isobutylmethacrylat, 20 Tle Methacrylsäure, 35 Tle Methylmethacrylat und 9 Tle Di-tert.-butylperoxid als Initiator zugegeben.

Nach Beendigung der Zugabe wird die Reaktionstemperatur beibehalten, bis die Rückstandsbestimmung einen mindestens 95%igen Polymerisationsumsatz ergibt. Bei einem zu langsamen Reaktionsfortgang wird der Ansatz mit 3 Tlen Di-tert.-butylperoxid versetzt. Nach dem Abdestillieren des Xylols im Vakuum wird das erhaltene Produkt in Methoxypropoxypropanol angelöst.

| Kenndaten: | |
|---|---|
| Festkörpergehalt : | 90 % |
| Saürezahl : | 15 mg KOH/g |
| Grenzviskosität (Chloroform) : | 13,5 ml/g |
| Viskosität (auf 70 % mit Testbenzin verdünnt, DIN 53211/20° C): | ca. 350 s |

Zur Ausprüfung gelangen Weißlacke, die in bekannter Weise nach folgender Rezeptur hergestellt werden.

| 111,1 | Harz, 90%ig in Methoxypropoxypropanol |
|---|---|
| 80,0 | Titandioxid |
| 5,0 | Kobalt-Siccativ, 1 % Co |
| 5,0 | Blei-Siccativ, 10 % Pb |
| 5,0 | Calcium-Siccativ, 2 % Ca |
| 2,0 | Antihautmittel |
| 0,5 | Verlaufmittel; 0,25 Tle Feststoffgehalt |
| 6,2 | Testbenzin |
| 214,8 | Lack, 85%ig |

Methoden der lacktechnischen Ausprüfung:

Lackviskosität: ICI-Kegel-Platte-Viskosimeter: In Abhängigkeit von der Viskosität wurde wahlweise mit Scherraten 2500 s$^{-1}$ oder 10000 s$^{-1}$ bei 20° C gemessen.

Trocknung: gemessen mit B.K. Drying Recorder (Hersteller: Mickle Laboratory Engineering Co) bei 20° C und einer Schichtstärke von 150 μm Naßfilm auf Glasstreifen.

Streichbarkeit: Die Verarbeitbarkeit der Materialien wurde subjektiv nach einem Punktesystem (1 = sehr gut, 5 = sehr schlecht) beurteilt.

Runzelneigung: 400 μm- und 600 μm-Naßfilmschichten wurden auf Glasplatten aufgebracht und über einen Zeitraum von 4 Wochen beobachtet.

In Tabelle 1 findet sich eine Zusammenstellung der Prüfergebnisse der lacktechnischen Ausprüfung.

Tabelle 1

| Beispiel | Lackviskosität Pa.s | klebfrei Stunden | Durchtrocknung Stunden | Streichbarkeit | Runzelneigung |
|---|---|---|---|---|---|
| 1 | 1,9 | 5 | 9 | 2 | keine |
| 2 | 1,4 | 4 | 10 | 1 | keine |
| 3 | 1,0 | 4 | 10 | 1 | keine |
| 4 | 1,4 | 4 | 9 | 2 | sehr schwach |
| 5 | 2,1 | 4 | 12 | 2 | keine |
| 6 | 1,0 | 4 | 10 | 1 | keine |
| A | 4,0 | 8 | 20 | 5 | stark ausgeprägt |

**Ansprüche**

1. Verfahren zur Herstellung von niedrigviskosen, lufttrocknenden Bindemitteln zur Formulierung von festkörperreichen, schnelltrocknenden Maler- und Bautenlacken, dadurch gekennzeichnet daß man

(A) 25 bis 50 Gew.-% eines Fettsäure-Pfropfcopolymerisats aus

Aa) 20 bis 60 Gew.-% an trocknenden Fettsäuren mit einer Jodzahl von über 130, vorzugsweise von 150 bis 200, und mit überwiegend isolierten Doppelbindungen,

Ab) gegebenenfalls 5 bis 10 Gew.-% Tetrahydrophthalsäureanhydrid,

Ac) gegebenenfalls 1 bis 8 Gew.-% Methacrylsäure und

Ad) 30 bis 70 Gew.-% einer Mischung von Vinyl-und/oder (Meth)acryl-Monomeren, die außer derC-C-Doppelbindung keine weiteren funktionellen Gruppen tragen,

mit

(B) 30 bis 60 Gew.-% an trocknenden Fettsäuren mit einer Jodzahl von über 130, vorzugsweise von 140 bis 200,

(C) gegebenenfalls bis zu 10 Gew.-% an aromatischen und/oder aliphatischen Monocarbonsäuren,

(D) 5 bis 25 Gew.-% an Polyolen mit 3 bis 6 Hydroxylgruppen pro Molekül,

(E) gegebenenfalls bis zu 20 Gew.-% an Polycarbonsäuren oder deren Anhydriden mit 2 bis 4 Carboxylgruppen pro Molekül,

bei 170 bis 260°C unter Azeotropdestillation mit Xylol als Kreislaufmittel bis zu einer Säurezahl von unter 30 mg KOH/g umsetzt, und

(F) gegebenenfalls anschließend mit bis zu 15 Gew.-% an Diisocyanaten und/oder deren Dimeren bei 70 bis 130°C bis zu einem NCO-Wert von 0 reagiert,

mit der Maßgabe, daß die Endprodukte eine Grenzviskositätszahl (gemessen in Chloroform bei 20°C) von 5,3 bis 9,0 ml/g, vorzugsweise von 6,0 bis 8,0 ml/g, aufweisen, und die Summen der Prozentzahlen für Aa) bis Ad) und A) bis F) jeweils 100 ergeben.

2. Verwendung der nach Anspruch 1 hergestellten Bindemittel zur Formulierung von festkörperreichen, schnelltrocknenden Maler- und Bautenlacken.